# FASCICULE DE BREVET EUROPEEN

(11) **EP 2 996 831 B1**
(45) Date de publication et mention de la délivrance du brevet: **21.06.2017**
(21) Numéro de dépôt: 14722699.7
(22) Date de dépôt: 15.04.2014
(51) Int. Cl.: B23D 61/18, B23D 65/00, B24D 18/00

(54) **FIL ABRASIF DE SCIAGE, PROCÉDÉ DE FRABRICATION ET UTILISATION**
SCHLEIFSÄGEDRAHT, HERSTELLUNGSVERFAHREN DAFÜR UND VERWENDUNG DAVON
ABRASIVE SAWING WIRE,MANUFACTURING PROCESS AND USE

(30) Priorité: 14.05.2013 FR 1354310
(43) Date de publication de la demande: 23.03.2016
(73) Titulaire: Commissariat à l'Énergie Atomique et aux Énergies Alternatives, 75015 Paris (FR); THERMOCOMPACT, 74370 Metz Tessy (FR)
(72) Inventeur: LY, Michel, F-74000 Annecy (FR); SANCHEZ, Gérald, F-74230 Dingy Saint Clair (FR); WEBER, Xavier, F-74000 Annecy (FR)
(74) Mandataire: Cabinet Laurent & Charras
(86) Numéro de dépôt international: PCT/FR2014/050911
(87) Numéro de publication internationale: WO 2014/184457

(56) Documents cités:
- EP-A1- 2 572 818
- WO-A1-2010/092151
- US-A- 5 791 330
- US-A1- 2013 084 786

## Description

### DOMAINE DE L'INVENTION

L'invention concerne un fil abrasif comprenant une âme en acier et des particules abrasives maintenues sur l'âme au moyen d'un liant à base d'un alliage Ni/Co selon le préambule de la revendication 1. Le domaine d'utilisation de la présente invention concerne notamment le sciage de matériaux tels que le silicium, le saphir, ou le carbure de silicium.

### ETAT ANTERIEUR DE LA TECHNIQUE

Un tel fil est connu du document EP 2 572 818 A1. De manière générale, la découpe de matériaux durs tels que les wafers de silicium peut être réalisée au moyen d'un fil (acier) présentant à sa périphérie des particules abrasives (diamant par exemple).

Pour résoudre les éventuelles ruptures de fil, l'art antérieur préconise l'utilisation d'un fil en acier à forte teneur en carbone.

Les particules abrasives sont liées au fil au moyen d'une couche de liant en résine ou en métal. Ce liant maintient les particules à la surface du fil de manière à lui conférer des propriétés abrasives.

De manière générale, et contrairement au liant, les particules sont en un matériau plus dur que le matériau à découper.

En effet, lors de la première utilisation du fil, le liant est érodé en partie pour laisser apparaître les particules abrasives. Le sciage du matériau est alors réalisé par passages répétés du fil de découpe sur la surface du matériau à découper, c'est-à-dire par frottements des parties saillantes des particules abrasives sur le matériau.

Une fois les parties saillantes des particules abrasives exposées, le liant n'entre plus en contact direct avec le matériau à découper. Cependant, il peut s'user selon les deux mécanismes suivants :
- par déformation mécanique : lors du sciage d'un matériau, les particules abrasives sont poussées alternativement en avant et en arrière et selon la direction principale du fil. Ce mouvement est la directe conséquence du frottement avec le matériau en cours de découpe. Ainsi, le liant se déforme un peu à chaque mouvement. A l'issue de la découpe, le liant peut être localement trop déformé pour retenir efficacement les particules abrasives à la surface du fil.
- par abrasion/érosion : ce mécanisme résulte de la présence de fragments du matériau à découper se trouvant entre le liant - qui se déplace avec le fil - et le matériau à découper. En raison des mouvements de sciage, les fragments de matériau érodent le liant, avec pour conséquence une diminution progressive de son épaisseur. A l'issue de la découpe, le liant n'est plus assez épais pour retenir les particules abrasives à la surface du fil de manière efficace. Les particules abrasives se détachent, ce qui réduit progressivement le pouvoir abrasif du fil et donc son aptitude à découper un matériau.

De manière générale, la déformation mécanique est un phénomène plus important que l'abrasion du liant.

Afin de retarder, voire d'éliminer la détérioration des propriétés abrasives du fil, des liants à base d'alliages métalliques ont été développés. Ceux-ci s'avèrent présenter des propriétés de dureté supérieures à celles d'une résine.

Ainsi, pour limiter l'usure du fil, un liant à base d'un alliage de nickel et de phosphore peut être utilisé. Ce liant est déposé chimiquement à la surface du fil de manière à recouvrir des grains d'abrasifs. En outre, sa dureté est supérieure à celle du nickel pur.

Afin de limiter la fissuration de la couche de liaison, le document EP 2 428 317 préconise de limiter les teneurs en soufre, oxygène, et hydrogène dans le dépôt électrolytique de nickel.

Enfin, pour résoudre les éventuelles ruptures de fil, l'art antérieur préconise l'utilisation d'un fil en acier à forte teneur en carbone. Cependant, les fils d'acier sont sensibles à la corrosion, en particulier lorsqu'il existe un contact électrolytique entre l'acier et un métal plus noble, tel que le cuivre, le nickel, ou le cobalt. Ce contact électrolytique peut se réaliser quand le liant est fissuré, et que le fil est au contact d'eau. Ces conditions sont parfois réalisées lors de l'opération de découpe. Le fil est tendu (et sa couche de métal liant peut alors se fissurer) et il est arrosé par de l'eau.

Il existe néanmoins un besoin de développer des alternatives à ces liants, afin notamment d'assurer la tenue des grains abrasifs sur l'âme d'un fil abrasif mais également de contrôler l'usure du liant. Tel est le problème technique que propose de résoudre la présente invention.

### EXPOSE DE L'INVENTION

Les Demandeurs ont mis au point un fil à la surface duquel des particules abrasives sont maintenues au moyen d'un liant.

En outre, le liant protège l'âme du fil d'une usure prématurée lors de son utilisation. Sa composition spécifique permet d'améliorer la résistance à la déformation mécanique, mais également la résistance à l'abrasion lors des opérations de découpe, et ce tout en minimisant les pertes de particules abrasives.

Ainsi, le liant présente simultanément des propriétés de dureté et de résistance à l'abrasion.

Plus précisément, l'objet de la présente invention concerne un fil abrasif selon la revendication 1 comprenant une âme en acier et un revêtement externe comprenant un liant et des particules abrasives, ledit liant étant constitué d'au moins une couche en alliage nickel/cobalt dont la teneur en cobalt est comprise entre 20% et 85% en poids par rapport au poids de l'alliage Ni/Co, avantageusement entre 37 et 65%.

Comme déjà indiqué, le liant permet de maintenir les particules abrasives à la périphérie de l'âme en acier. Ainsi, les particules abrasives ne présentent essentiellement pas de degré de liberté sur ladite âme. De manière avantageuse, les particules ne présentent aucun degré de liberté sur l'âme en acier, notamment lors de l'utilisation du fil abrasif selon l'invention.

En effet, le liant en alliage Ni/Co dont la teneur en cobalt est comprise entre 20 et 85% en poids, confère une meilleure tenue des particules sur l'âme par rapport aux liants en résine de l'art antérieur. Il présente des propriétés de dureté et de résistance à l'abrasion permettant de maintenir plus efficacement les particules en place, même lors de l'utilisation du fil au cours des opérations de découpe.

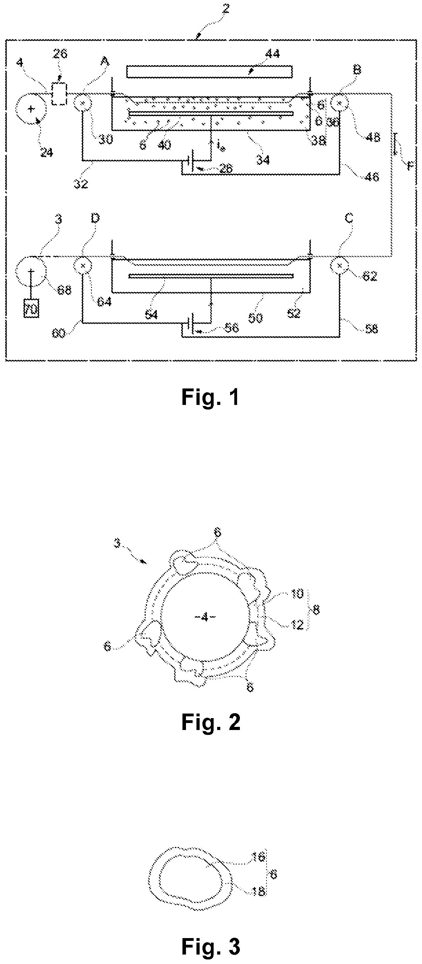

Les particules abrasives peuvent être en contact direct avec l'âme en acier, mais elles peuvent également être, de manière avantageuse, séparées de l'âme par une fine couche de liant. C'est notamment le cas quand on emploie le procédé décrit en figure 1.

Le liant recouvre au moins partiellement les particules abrasives.

De préférence, le liant ne doit pas se fissurer pendant l'usage du fil. En d'autres termes, quand on met le fil en tension, à la limite de sa rupture, la surface du liant ne doit pas se fissurer.

Selon un mode de réalisation particulier, le revêtement externe comprend au moins une couche supplémentaire de liant en un alliage Ni/Co, dont la teneur en cobalt est comprise entre 20% et 85% en poids, avantageusement entre 37 et 65%. Le liant peut donc se présenter sous la forme d'une couche unique ou d'une multitude de couches, avantageusement deux couches.

Par « couche » on comprend une enveloppe du fil, de composition homogène. Ainsi, deux couches se distinguent l'une de l'autre par leur différence de composition chimique, ou par la présence d'abrasif dans l'une d'elles seulement.

Ces couches de liant peuvent être constituées d'alliages Ni/Co différents les uns des autres.

La première couche de liant, en contact avec l'âme en acier, peut présenter une dureté supérieure à celle de la, ou des couches supplémentaires, afin d'assurer le maintien des particules abrasives sur le fil.

En revanche, la ou les couches supplémentaires de liant (couche(s) externe(s)) sont avantageusement très résistantes à l'abrasion, mais aussi ductiles afin d'éviter la fissuration du liant lors de la mise sous tension mécanique du fil. Pour cela, il est préférable que la couche de liant externe ait une ductilité suffisante. A cet égard, on peut observer si la ductilité de la couche externe est suffisante, en soumettant le fil à un simple essai de traction, jusqu'à sa rupture. La couche externe suffisamment ductile est généralement continue sur son intégralité, sauf dans les zones de striction de part et d'autre de la rupture.

Selon un mode de réalisation particulier, le fil abrasif comprend une âme en acier et un revêtement externe comprenant un liant et des particules abrasives. Le liant est constitué, dans ce cas particulier, de deux couches de liant en alliage nickel/cobalt, dont la teneur en cobalt est comprise entre 20% et 85% en poids par rapport au poids de l'alliage Ni/Co (indépendamment d'une couche à l'autre). La deuxième couche de liant qui recouvre la première couche de liant adjacente à l'âme en acier, est en un alliage Ni/Co contenant plus de cobalt que la première couche de liant. Ainsi, la couche de liant externe (deuxième couche) présente des propriétés de résistance à l'abrasion supérieures eu égard au fort pourcentage de cobalt. En outre, la première couche présente des propriétés de dureté supérieures à celles de l'alliage liant de la deuxième couche en raison de sa composition adaptée.

Selon un autre mode de réalisation particulier, la dureté du liant en alliage Ni/Co peut être améliorée par introduction de soufre. Ceci peut notamment être mis en oeuvre selon le procédé décrit ci-après, par introduction de saccharinate de sodium (C₇H₄NO₃S, Na, 2H₂O) dans le bain d'électrolyte permettant de former la couche de liant.

Ainsi, l'alliage Ni/Co peut contenir de 100 à 1000 ppm (parties par million) en poids de soufre, de préférence de 300 à 700 ppm.

Il est préférable que seule la première couche de liant contienne du soufre. En effet, l'addition de soufre augmente la dureté du liant, mais elle en diminue la ductilité. Une teneur en soufre élevée de la couche externe peut provoquer une fissuration du revêtement quand le fil est tendu dans la zone de découpe. Cette fissuration laisse passer de l'eau, et elle met en contact électrolytique l'acier de l'âme du fil, avec le métal liant. Il s'ensuit une corrosion de l'âme du fil. Le fil devient progressivement inutilisable.

Le liant, qu'il soit monocouche ou multicouche, peut notamment être obtenu par dépôts électrolytiques successifs d'alliages Ni/Co.

L'alliage constituant chacune des couches de liant présente avantageusement une dureté comprise entre 300 et 800 Hv, avantageusement entre 300 et 500 Hv.

La dureté d'une couche de métal liant est mesurée à l'aide d'un micro-duromètre selon les techniques faisant partie des connaissances générales de l'homme du métier. Un indenteur Vickers est généralement employé, avec une charge compatible avec l'épaisseur de la couche. Cette charge est généralement comprise entre 1 gramme-force et 100 grammes-force. Si l'empreinte laissée par l'indenteur Vickers a une taille trop grosse par rapport à l'épaisseur de la couche (même avec une faible charge), on peut employer un indenteur Knoop (plus étroit), et convertir la valeur de dureté Knoop en dureté Vickers, à l'aide d'une table de conversion.

Les particules abrasives assurant la découpe de matériaux, peuvent notamment être en un matériau choisi dans le groupe comprenant le carbure de silicium SiC ; la silice SiO₂ ; le carbure de tungstène WC ; le nitrure de silicium Si₃N₄ ; le nitrure de bore cubique cBN ; le dioxyde de chrome CrO₂; l'oxyde d'aluminium Al₂O₃; les diamants ; et les diamants pré-revêtus de nickel, fer, cobalt, cuivre, ou titane, ou de leurs alliages.

Selon un mode de réalisation particulier, le fil abrasif peut comprendre plusieurs types de particules abrasives distinctes.

L'homme du métier saura choisir la combinaison adéquate liant/particules abrasives en fonction du matériau à découper.

Selon un mode de réalisation particulier, les particules abrasives sont constituées de grains recouverts d'une pellicule, qui peut être distincte du liant. Cette pellicule recouvre au moins partiellement chaque grain, avantageusement intégralement. Les matériaux recouvrant les grains de diamants sont par exemple le nickel, le cobalt, le fer, le cuivre, ou bien le titane.

Le diamètre total des particules, c'est-à-dire du grain et le cas échéant de la pellicule, est avantageusement compris entre 1 micromètre et 500 micromètres. Il est préférentiellement inférieur au tiers du diamètre de l'âme en acier. Ainsi, selon un mode de réalisation particulier, le diamètre des particules peut être compris entre 10 et 22 micromètres pour une âme présentant un diamètre de 0.12mm.

Par diamètre, on entend le plus grand diamètre (ou la plus grande dimension) des particules lorsque celles-ci ne sont pas sphériques.

De manière avantageuse, la pellicule recouvrant le grain est en un matériau ferromagnétique à la température de fabrication du fil abrasif (dépôt électrolytique des particules abrasives - voir le procédé décrit ci-après). Le nickel, le fer, et le cobalt en sont des exemples. Ces métaux peuvent être alliés entre eux, et ils peuvent aussi contenir des éléments durcissant comme le soufre et le phosphore. Il est à noter que le phosphore diminue le ferromagnétisme du nickel, et que, dans ce cas, il faut en limiter la concentration.

En outre, le matériau formant la pellicule est avantageusement conducteur électrique.

La pellicule recouvre au moins partiellement les particules abrasives, avantageusement intégralement. Cependant, au cours de l'utilisation du fil abrasif selon l'invention, la partie du grain au contact du matériau à découper est dépourvue de pellicule, celle-ci étant érodée dès les premières opérations de découpe, de la même manière que le liant.

La masse de la pellicule, rapportée à la masse totale des grains revêtus, est avantageusement comprise entre 10% et 60%, dans le cas de grains de diamant.

Cette pellicule peut notamment être déposée sur les grains préalablement à l'utilisation des grains/particules abrasives dans le procédé de fabrication du fil. Les techniques pouvant être mises en oeuvre pour le dépôt d'une pellicule sur chacun des grains incluent notamment la pulvérisation cathodique (« *sputtering* »), mais également l'électrolyse, le dépôt chimique en phase vapeur (CVD de l'anglais « *Chemical Vapor Deposition* »), et le dépôt électrochimique sans courant (« *Electroless Nickel Plating* »).

Généralement, on peut observer que 5 à 50% de la surface du fil abrasif est occupée par des particules abrasives (éventuellement recouvertes d'une couche de liant, quand le fil est neuf)

De manière générale, l'âme en acier du fil abrasif selon l'invention est un fil présentant une section transversale circulaire. Il s'agit d'un fil en acier dont le diamètre est avantageusement compris entre 70 micromètres et 1 millimètre.

L'homme du métier saura adapter le diamètre de l'âme en fonction du matériau devant être découpé. Ainsi, une âme dont le diamètre est compris entre 200 micromètres et 1 millimètre est particulièrement adaptée pour découper des briques de silicium dans des lingots. En revanche, une âme dont le diamètre est compris entre 70 et 200 micromètres est particulièrement adaptée pour découper des wafers de silicium dans des briques.

L'âme du fil abrasif se présente généralement sous la forme d'un fil dont la résistance à la traction est avantageusement supérieure à 2000 ou 3000 MPa, mais généralement, inférieure à 5000 MPa.

D'autre part, l'âme peut présenter un allongement à la rupture, c'est-à-dire l'augmentation de la longueur de l'âme avant que celle-ci ne casse, avantageusement supérieur à 1%, encore plus avantageusement supérieur à 2%. Toutefois, il reste préférentiellement inférieur à 10 ou 5%.

De manière avantageuse, l'âme du fil est en un matériau conducteur électrique, c'est-à-dire un matériau dont la résistivité est inférieure à 10⁻⁵ohm.m à 20°C, et notamment l'acier.

L'âme en acier peut notamment être en un matériau choisi dans le groupe comprenant l'acier au carbone, l'acier inoxydable ferritique, l'acier inoxydable austénitique, et l'acier laitonné. L'acier au carbone contient préférentiellement entre 0.6 et 0.8% en poids de cet élément.

La présente invention concerne également le procédé de fabrication du fil abrasif décrit ci-dessus selon la revendication 7. Ce procédé comprend notamment les étapes suivantes :
- dépôt électrolytique sur une âme en acier (fil en acier) d'un revêtement comprenant un liant et des particules abrasives éventuellement magnétiques, ledit liant étant constitué d'une couche en alliage nickel/cobalt dont la teneur en cobalt est comprise entre 20% et 85% en poids par rapport au poids de l'alliage Ni/Co, par passage dans un bain (B₁) d'électrolyte comprenant au moins des ions cobalt II et nickel II, et des particules abrasives ;
- optionnellement, dépôt électrolytique d'une couche supplémentaire de liant par passage dans un bain (B₂) d'électrolyte comprenant au moins des ions cobalt II et nickel II, ladite couche supplémentaire étant en alliage Ni/Co dont la teneur en cobalt est comprise entre 20% et 85% en poids.

Dans la pratique, des ions Co²⁺ et Ni²⁺ sont généralement introduits. Cependant, d'autres degrés d'oxydation peuvent coexister, mais, de manière générale, ils sont très minoritaires en concentration dans les bains d'électrolyse.

De manière avantageuse, le procédé peut comprendre au moins l'une des étapes suivantes, avant le dépôt électrolytique :
- dégraissage de l'âme en acier en milieu alcalin ;
- décapage de l'âme en acier en milieu acide.

Lorsque ce procédé comprend un deuxième dépôt électrolytique d'alliage de cobalt et de nickel, le bain (B₂) peut présenter une composition en ions nickel et cobalt distincte de celle du bain (B₁). Ce bain est avantageusement dépourvu de particules abrasives.

Selon un mode de réalisation particulier, la deuxième couche peut être en cobalt pur, métal qui résiste bien à l'abrasion.

Comme déjà indiqué, le liant peut comprendre au moins deux couches. La ou les éventuelles couches recouvrant la deuxième couche peuvent être obtenues soit par réitération du passage dans le bain (B₂), soit par passage dans au moins un autre bain électrolytique comprenant des ions Co II et Ni II.

Typiquement, les bains (B₁) et (B₂), et le cas échéant les autres bains, comprennent, indépendamment les uns des autres, entre 1 et 150 g/L d'ion cobalt II et entre 50 et 150 g/L d'ions nickel II.

D'autre part, le bain (B₁) comprend entre 1 et 100 g/L de particules abrasives.

Comme déjà indiqué, la dureté du liant peut également être améliorée par incorporation de soufre dans la première couche de liant et/ou le cas échéant dans au moins l'une des couches supplémentaires. De préférence, il ne s'agit pas de la couche externe.

Ainsi, le soufre peut être introduit notamment par addition de saccharinate de sodium (C₇H₄NO₃S, Na, 2H₂O) dans le bain d'électrolyte permettant de former le liant. La quantité introduite peut être comprise entre 1 et 10 g/L, avantageusement de l'ordre de 5 g/L.

Comme déjà dit, pour plus de détails sur les étapes du procédé ainsi que le dispositif mis en oeuvre, le lecteur est invité à prendre connaissance de la demande de brevet dont le numéro de dépôt est FR 12 53017.

L'invention concerne également l'utilisation selon la revendication 10 du fil abrasif décrit ci-dessus, pour scier un matériau pouvant notamment être choisi dans le groupe comprenant le silicium, le saphir, et le carbure de silicium. Le fil abrasif peut être mis en oeuvre dans le cadre de la production de wafers de silicium.

L'homme du métier saura adapter le fil abrasif en fonction du matériau à découper. Plus particulièrement, les particules abrasives sont choisies de manière à être plus dures que le matériau à découper.

L'invention et les avantages qui en découlent ressortiront mieux des figures et exemples suivants donnés afin d'illustrer l'invention et non de manière limitative.

### DESCRIPTION DES FIGURES

La figure 1 illustre un dispositif permettant d'obtenir le fil abrasif selon un mode de réalisation particulier l'invention.
La figure 2 illustre une vue en coupe du fil abrasif selon un mode de réalisation particulier de l'invention.
La figure 3 illustre une vue en coupe d'une particule abrasive du fil abrasif selon un mode de réalisation particulier l'invention.

### DESCRIPTION DETAILLEE DE L'INVENTION

Le dispositif (2) illustré par la figure 1 permet de mettre en oeuvre un mode de réalisation particulier du procédé de dépôt électrolytique sur un fil (4) en acier pour préparer le fil abrasif (3) selon la présente invention.

Le procédé comprend notamment les étapes suivantes :
- déroulement d'une âme en acier (4) (fil en acier) stockée sous la forme d'une bobine (24), selon la direction de la flèche F ;
- optionnellement, dégraissage de l'âme en acier (4) en milieu alcalin ;
- optionnellement, décapage de l'âme en acier (4) en milieu acide ;
- optionnellement passage de l'âme en acier (4) dans un dispositif d'aimantation (26) qui applique un champ magnétique, dont l'intensité est avantageusement supérieure à 800 A/m. L'âme (4) est ainsi aimantée de manière permanente ;
- dépôt électrolytique sur l'âme en acier d'un revêtement comprenant un liant et des particules abrasives, ledit liant étant un alliage nickel/cobalt dont la teneur en cobalt est comprise entre 20% et 85% en poids par rapport au poids de l'alliage Ni/Co, par passage dans un bain (B₁) (36) d'électrolyte (38) comprenant au moins des ions cobalt II et nickel II, et des particules abrasives (6) ;
- optionnellement, dépôt électrolytique d'une deuxième couche liante par passage dans un bain (B₂) d'électrolyte (52) comprenant au moins des ions cobalt II et nickel II.
- obtention du fil abrasif (3) ;
- optionnellement stockage du fil abrasif (6), avantageusement sous forme de bobine (68) au moyen d'un moteur (70).

Le dispositif (2) mis en oeuvre comprend une source (28) qui génère un courant d'électrolyse iₑ. La borne positive de la source (28) est reliée à l'électrode (40) située dans le bain (B₁) (36) de l'électrolyte (38) qui est contenu dans le récipient (34). La borne négative de la source (28) est reliée à deux poulies conductrices (30) et (48) positionnées de part et d'autre du récipient (34) via les conducteurs électriques (32) et (46). Les deux poulies conductrices (30) et (48) permettent d'assurer deux points (A) et (B) de contact mécanique avec l'âme en acier (4) qui est ainsi reliée à la borne négative de la source (28).

De manière avantageuse, on peut employer deux sources de courant (28A et 28B). Leurs bornes négatives respectives sont reliées ensemble aux poulies conductrices (30) et (48).

La borne positive du générateur (28A) est reliée à une anode (40A) constituée de nickel.

La borne positive du générateur (28B) est reliée à une anode (40B) constituée de cobalt.

En supposant que la teneur en cobalt dans le dépôt d'alliage de nickel et de cobalt doive être de 20%, il est préférable de faire passer 20% du courant dans le générateur (28B) relié à l'anode de cobalt (40B), et 80% du courant dans le générateur (28A) relié à l'anode de nickel (28A). Pour plus de clarté, la figure 1 représente un dispositif comprenant un seul générateur de courant électrique, et une seule anode dans le bain (B₁) (36).

En option, le dispositif (2) comprend en outre un appareil d'aimantation (44) des particules abrasives (6) et de l'âme en acier (4) une fois celle-ci immergée dans le bain (B₁) (36). Il est positionné au-dessus du bain (B₁) (36).

En option, les particules abrasives mises en oeuvre sont magnétiques afin de permettre le dépôt électrolytique du revêtement externe sur l'âme en acier. Elles peuvent ainsi être attirées par l'âme en acier qui est magnétisée au cours de ce procédé.

Comme déjà précisé, les propriétés magnétiques des particules abrasives peuvent notamment provenir d'une pellicule magnétique les recouvrant.

L'âme en acier est ainsi recouverte d'un revêtement constitué de liant et de particules abrasives par dépôt électrolytique lors du passage dans le bain (B1).

Selon un mode de réalisation particulier, une deuxième couche de liant peut ensuite être déposée sur l'âme en acier, par passage dans le deuxième bain (B₂) (52).

Ce deuxième bain (B₂) (52) qui est contenu dans le récipient (50), comprend un électrolyte. Il est avantageusement dépourvu de particules abrasives.

L'étape de dépôt électrolytique de la deuxième couche de liant consiste notamment à immerger l'âme en acier recouverte d'une première couche de liant et de particules abrasives, dans un bain dans lequel est disposée une électrode (54) reliée à la borne positive d'une deuxième source (56) de courant.

La borne négative de la deuxième source (56) de courant est reliée à deux poulies conductrices (62) et (64) situées de part et d'autre du récipient (50) contenant le deuxième bain (B₂) (52) via les deux conducteurs électriques (58) et (60).

De manière avantageuse, on peut employer deux sources de courant (56A et 56B). Leurs bornes négatives respectives sont reliées ensemble aux poulies conductrices (62) et (64).

La borne positive du générateur (56A) est reliée à une anode (54A) constituée de nickel.

La borne positive du générateur (56B) est reliée à une anode (54B) constituée de cobalt.

En supposant que la teneur en cobalt dans le dépôt d'alliage de nickel et de cobalt doive être de 85%, on aura intérêt à faire passer 85% du courant dans le générateur (56B) relié à l'anode de cobalt (54B), et 15% du courant dans le générateur (56A) relié à l'anode de nickel (54A). Pour plus de clarté, la figure 1 représente un dispositif comprenant un seul générateur de courant électrique, et une seule anode dans le bain (B₂) (52).

Les poulies conductrices (62) et (64) permettent d'assurer la connexion entre l'âme (4) en acier et la borne négative de la deuxième source (56) de courant aux points de contact (C) et (D).

A l'issue du passage dans le deuxième bain d'électrolyte, le fil abrasif (3) est obtenu. Il peut être stocké sous forme de bobine (68).

Comme déjà indiqué, le dispositif (2) est décrit plus en détails dans la demande de brevet dont le numéro de dépôt est FR 12.53017.

Comme le montre la figure 2, le fil abrasif (3) selon l'invention présente une âme (4) enrobée par une première couche (10) de liant recouvrant partiellement les particules abrasives (6).

Selon ce mode de réalisation particulier, le fil abrasif comprend en outre une deuxième couche (12) de liant recouvrant les particules abrasives (6). Cette deuxième couche de liant est avantageusement plus résistante à l'abrasion que la première couche. D'autre part, la deuxième couche (12) de liant est avantageusement moins dure et plus ductile que la première couche (10) recouvrant l'âme en acier (4).

Les deux couches (10) et (12) et les particules abrasives (6) constituent le revêtement externe (8) du fil abrasif (3).

Selon un mode de réalisation particulier, la particule abrasive (6) comprend un grain abrasif (16) recouvert d'une pellicule (18) (figure 3). Cette pellicule est avantageusement réalisée en matériau magnétique afin de faciliter le dépôt électrolytique des particules sur l'âme en acier (4). En effet, le dépôt électrolytique du revêtement externe est avantageusement mis en oeuvre en présence de particules magnétiques

### EXEMPLES DE REALISATION DE L'INVENTION

Plusieurs fils abrasifs (exemples 1-9) ont été préparés à partir d'une âme en acier en l'état écroui. L'âme en acier comprend 0.8% de carbone, elle présente un diamètre de 0.12 millimètres.

### Mode opératoire :

Ces fils ont été préparés selon les étapes suivantes :
(1) dégraissage de l'âme en acier en milieu alcalin ;
(2) décapage de l'âme en acier en milieu acide ;
(3) dépôt électrolytique par passage de l'âme en acier dans un premier bain d'électrolyte (B₁) comprenant des particules abrasives, de manière à former une première couche externe ;
(4) optionnellement, deuxième dépôt électrolytique par passage de l'âme en acier dans un deuxième bain d'électrolyte (B₂), de manière à former une deuxième couche externe.

Les compositions respectives des bains d'électrolyte (B₁) et (B₂) ont été ajustées en fonction des exemples. Il s'agit de bains aqueux.

Par exemple, le bain d'électrolyte (B₁) selon l'exemple 9 contient :
- 100 g/L de Ni²⁺ sous forme de sulfamate de nickel et de chlorure de nickel ;
- 4 g/L de Co²⁺ sous forme de sulfamate de cobalt ;
- 15 g/L de Cl⁻ sous forme de chlorure de nickel ;
- 35 g/L de H₃BO₃ (acide borique) ;
- 2 mL/L de mouillant UNW 89 (de la société Mc Dermid), constitué entre autres de laurylsulfate de sodium ;
- 20 g/L de diamants prénickelés présentant un diamètre de 12 à 22 micromètres et contenant environ 50% en poids de nickel.

Le pH de ce bain (B₁) est ajusté à 3.8 par addition d'acide sulfamique.

Le bain d'électrolyte (B₂) selon l'exemple 9 contient :
- 100 g/L de Ni²⁺ sous forme de sulfamate de nickel et de chlorure de nickel ;
- 30 g/L de Co²⁺ sous forme de sulfamate de cobalt ;
- 15 g/L de Cl⁻ sous forme de chlorure de nickel ;
- 35 g/L de H₃BO₃ (acide borique).

Le pH de ce bain (B₂) est ajusté à 3.8 par addition d'acide sulfamique.

Les conditions de traitement de l'âme en acier dans les bains (B₁) et (B₂) sont identiques et sont les suivantes :
- température: 55°C ;
- vitesse du fil : 5 m/min ;
- densité de courant : 2 A/dm².

Les fils selon les exemples 1 à 8 du tableau 1 ont été préparés selon les étapes (1) à (3) de ce mode opératoire en ajustant la quantité de cobalt et nickel. Seul le passage dans le bain (B₁) a été réalisé.

En revanche, le fil selon l'exemple 9 a été préparé selon les étapes (1) à (4) du mode opératoire. Le liant de ce fil est donc constitué de deux couches.

### Résultats :

La dureté des couches de liants des fils selon les exemples 1-9 ont été mesurées selon des techniques connues (micro-dureté Vickers).

La résistance à l'abrasion des couches de liant est évaluée à partir de plaquettes sur lesquelles elles ont été préalablement déposées (dans les mêmes conditions électrochimiques que pour les fils abrasifs). Ces plaquettes ont été placées dans un tribomètre à bille d'acier dur inoxydable, à sec, sans lubrification. Le volume de dépôt érodé a été observé. Un faible volume érodé correspond à une bonne résistance à l'abrasion.

Les conditions expérimentales mises en oeuvre pour préparer les fils selon les exemples 1-9 sont précisées dans le tableau suivant. Elles comprennent notamment :
- les concentrations respectives en ions Ni²⁺ et Co²⁺ dans l'électrolyte, en grammes par litre ;
- la concentration en cobalt dans le dépôt (liant) - le reste étant constitué de nickel et de traces d'oxygène, hydrogène, et soufre ;
- la dureté du dépôt, exprimée en Vickers (Hv) ;
- la résistance à l'abrasion du dépôt contre une pièce en acier dur.

Les fils selon les exemples 1-8 présentent une seule couche de liant dont l'épaisseur est égale à 8 micromètres.

Le fil selon l'exemple 9 présente une première couche de liant dont l'épaisseur est égale à 8 micromètres, et une deuxième couche de liant dont l'épaisseur est aussi égale à 8 micromètres.

**Tableau 1 : Dureté et résistance à l'abrasion de fils abrasifs selon l'invention (INV) et contre-exemples (CE).**

| Exemples | | Ni²⁺ (g/l) | Co²⁺ (g/l) | Cobalt dans dépôt (% en poids) | Dureté du dépôt (Hv) | Résistance à l'abrasion du dépôt |
|---|---|---|---|---|---|---|
| 1 (CE) | | 100 | 0 | 0 | 250 | mauvaise |
| 2 (CE) | | 100 | 2 | 10 | 280 | mauvaise |
| 3 (INV) | | 100 | 4 | 20 | 300 | moyenne |
| 4 (INV) | | 100 | 10 | 37 | 350 | moyenne |
| 5 (INV) | | 100 | 15 | 65 | 350 | moyenne |
| 6 (INV) | | 100 | 30 | 85 | 300 | bonne |
| 7 (CE) | | 0 | 100 | 100 | 250 | bonne |
| 8⁽ⁱ⁾ (INV) | | 100 | 4 | 20 | 500 | bonne, mais faible ductilité |
| 9⁽ⁱⁱ⁾ (INV) | B₁ | 100 | 4 | 20 | 300 | bonne |
| | B₂ | 100 | 30 | 85 | 300 | non mesurée |

| | | | | | | |
|---|---|---|---|---|---|---|
| ⁽ⁱ⁾ addition de 5 g/L de saccharinate de sodium, C₇H₄NO₃, Na, 2H₂O dans le bain B₁. Par SIMS (Secondary Ion Mass Spectrometry), on a mesuré 3.10¹⁹ atomes/cm³ de soufre, soit environ 300 ppm (parties par million, massiques). Présence de fissures lors de l'essai de traction sur le fil selon l'exemple 8. ⁽ⁱⁱ⁾ fil bicouche, dépôt de deux couches selon les étapes 1 à 4 : La résistance à l'abrasion de la couche externe déposée dans B₂ était bonne, l'autre n'a pas été mesurée car il s'agir de la couche interne déposée par B₁. | | | | | | |

On remarque que la dureté est élevée lorsque la teneur en cobalt dans le liant est comprise entre 37% et 65%. A cette concentration, l'abrasion est significativement réduite par rapport à un dépôt de nickel pur. Les couches sont ductiles.

D'autre part, l'abrasion est minimale pour les fils dont le pourcentage en cobalt dans le liant est au moins égal à 85. Les couches sont ductiles.

Un bon compromis dureté/abrasion est obtenu lorsque le pourcentage en cobalt est compris entre 20 et 85, avantageusement entre 37 et 65.

## Revendications

1. Fil abrasif comprenant une âme en acier et un revêtement externe comprenant un liant et des particules abrasives, ledit liant étant constitué d'au moins une couche en alliage nickel/cobalt, **caractérisé en ce que** ladite couche a une teneur en cobalt comprise entre 20% et 85% en poids par rapport au poids de l'alliage Ni/Co.

2. Fil abrasif selon la revendication 1, ***caractérisé* en ce que** l'alliage Ni/Co comprend entre 37 et 65% en poids de cobalt.

3. Fil abrasif selon la revendication 1 ou 2, ***caractérisé* en ce que** le revêtement externe comprend deux couches de liant en un alliage Ni/Co, dont la teneur en cobalt est, indépendamment l'une de l'autre, comprise entre 20% et 85% en poids.

4. Fil abrasif selon l'une des revendications 1 à 3, ***caractérisé* en ce que** l'alliage Ni/Co contient du soufre, avantageusement de 100 à 1000 ppm en poids.

5. Fil abrasif selon l'une des revendications 1 à 4, ***caractérisé* en ce que** les particules abrasives sont en un matériau choisi dans le groupe comprenant le carbure de silicium SiC ; la silice SiO₂ ; le carbure de tungstène WC ; le nitrure de silicium Si₃N₄ ; le nitrure de bore BN ; le dioxyde de chrome CrO₂ ; l'oxyde d'aluminium Al₂O₃; les diamants ; et les diamants pré-revêtus de nickel, fer, cobalt, cuivre, ou titane, ou de leurs alliages.

6. Fil abrasif selon l'une des revendications 1 à 5, ***caractérisé* en ce que** les particules abrasives sont constituées de grains recouverts, au moins en partie, d'une pellicule en un matériau ferromagnétique.

7. Procédé de fabrication d'un fil abrasif objet de l'une des revendications précédentes, comprenant les étapes suivantes :
- dépôt électrolytique sur un fil en acier d'un revêtement comprenant un liant et des particules abrasives ledit liant étant constitué d'une couche en alliage nickel/cobalt dont la teneur en cobalt est comprise entre 20% et 85% en poids par rapport au poids de l'alliage Ni/Co, par passage dans un bain (B₁) d'électrolyte comprenant au moins des ions cobalt II et nickel II, et des particules abrasives ;
- optionnellement, dépôt électrolytique d'une couche supplémentaire de liant par passage dans un bain (B₂) d'électrolyte comprenant au moins des ions cobalt II et nickel II, ladite couche supplémentaire étant en alliage Ni/Co dont la teneur en cobalt est comprise entre 20% et 85% en poids.

8. Procédé de fabrication d'un fil abrasif selon la revendication 7, ***caractérisé* en ce que** les bains (B₁) et (B₂) comprennent, indépendamment l'un de l'autre, entre 1 et 150 g/L d'ion cobalt II et entre 50 et 150 g/L d'ions nickel II.

9. Procédé de fabrication d'un fil abrasif selon la revendication 7 ou 8, ***caractérisé* en ce que** le bain (B₁) comprend entre 1 et 100 g/L de particules abrasives.

10. Utilisation du fil abrasif objet de l'une des revendications 1 à 6, pour scier un matériau choisi dans le groupe comprenant le silicium, le saphir, et le carbure de silicium.

## Patentansprüche

1. Schleifdraht, die eine Seele aus Stahl und eine externe Beschichtung umfasst, die einen Binder und Schleifpartikel umfasst, wobei der Binder aus mindestens einer Schicht einer Nickel-Kobalt-Legierung besteht, **dadurch gekennzeichnet, dass** die Schicht einen Kobaltgehalt zwischen 20 % und 85 % Gewicht in Bezug auf das Gewicht der Nickel-Kobalt-Legierung aufweist.

2. Schleifdraht gemäß Anspruch 1, **dadurch gekennzeichnet, dass** die Nickel-Kobalt-Legierung zwischen 37 und 65 Gewichtsprozent Kobalt enthält.

3. Schleifdraht gemäß Anspruch 1 oder 2, **dadurch gekennzeichnet, dass** die externe Beschichtung zwei Schichten Binder in einer Ni/Co-Legierung, deren Kobaltgehalt sich unabhängig von der einen zur anderen auf zwischen 20 % und 85 % am Gewicht beläuft.

4. Schleifdraht gemäß einem der Ansprüche 1 bis 3, **dadurch gekennzeichnet, dass** die Ni/Co-Legierung Schwefel, vorzugsweise von 100 bis 1.000 ppm des Gewichts, enthält.

5. Schleifdraht gemäß einem der Ansprüche 1 bis 4, **dadurch gekennzeichnet, dass** die Schleifpartikel aus einem Material gebildet sind, das aus der Gruppe stammt, die Siliziumkarbid (SiC), Kieselerde (SiO₂), Wolframkarbid (WC), Siliziumnitrid (Si₃N₄), Bornitrid BN, Chromdioxid (CrO₂) Aluminiumoxid (Al₂O₃), Diamanten, sowie mit Nickel, Eisen, Kobalt, Kupfer oder Titan oder deren Legierungen vorbeschichtete Diamanten umfasst.

6. Schleifdraht gemäß einem der Ansprüche 1 bis 5, **dadurch gekennzeichnet, dass** die Schleifpartikel mindestens teilweise eine mit einer Film aus ferromagnetischem Material abgedeckten Körnigkeit sind.

7. Herstellungsverfahren eines Schleifdrahts aus einem der vorstehenden Ansprüche, welches folgende Etappen umfasst:
- elektrolytische Ablagerung auf einem Draht aus Stahl, einer Beschichtung, die einen Binder und Schleifpartikel umfasst, wobei der Binder aus mindestens einer Schicht einer Nickel-Kobalt-Legierung besteht, **dadurch gekennzeichnet, dass** die Schicht einen Kobaltgehalt zwischen 20 % und 85 % Gewicht in Bezug auf das Gewicht der Nickel-Kobalt-Legierung durch das Durchlaufen eines Elektrolytbads (B₁) aufweist, welches mindestens Kobalt-Ionen II und Nickel-Ionen II, sowie Schleifpartikel enthält;
- optional die elektrolytische Ablagerung einer zusätzlicher Binderschicht durch das Durchlaufen eines Elektrolytbads (B₂), welches mindestens Kobalt-Ionen II und Nickel-Ionen II enthält, wobei die Zusatzschicht aus einer Ni/Co-Legierung besteht, deren Kobaltgehalt sich auf 20 % bis 85 % des Gewichts beläuft.

8. Herstellungsverfahren eines Schleifdrahts gemäß Anspruch 7, **dadurch gekennzeichnet, dass** die Bäder (B₁) und (B₂) unabhängig voneinander zwischen 1 und 150 g/L Kobalt-Ionen II und zwischen 50 und 150 g/L Nickel-Ionen II enthalten.

9. Herstellungsverfahren eines Schleifdrahts gemäß Anspruch 7 oder 8, **dadurch gekennzeichnet, dass** das Bad (B₁) zwischen 1 und 100 g/L Schleifpartikel enthält.

10. Verwendung des Schleifdrahts aus einem der Ansprüche 1 bis 6, um ein Material zu sägen, das der Gruppe von Silizium, Saphir und Siliziumkarbid entstammt.

## Claims

1. An abrasive wire comprising a steel core and an external coating comprising a binder and abrasive particles, said binder being formed of at least one layer of nickel/cobalt alloy, ***characterized* in that** said layer has a cobalt content in the range from 20% to 85% by mass with respect to the mass of the Ni/Co alloy.

2. The abrasive wire of claim 1, ***characterized* in that** the Ni/Co alloy comprises from 37 to 65% by mass of cobalt.

3. The abrasive wire of claim 1 or 2, ***characterized* in that** the external coating comprises two layers of binder made of a Ni/Co alloy, having, independently from each other, a cobalt content in the range from 20% to 85% by mass.

4. The abrasive wire of any of claims 1 to 3, ***characterized* in that** the Ni/Co alloy contains sulfur, advantageously from 100 to 1,000 wt.ppm.

5. The abrasive wire of any of claims 1 to 4, ***characterized* in that** the abrasive particles are made of a material selected from the group comprising silicon carbide SiC; silica SiO₂; tungsten carbide WC; silicon nitride Si₃N₄; boron nitride BN; chromium dioxide CrO₂; aluminum oxide Al₂O₃; diamond; and diamonds precoated with nickel, iron, cobalt, copper, or titanium, or with alloys thereof.

6. The abrasive wire of any of claims 1 to 5, ***characterized* in that** the abrasive particles are formed of grains at least partly covered with a film made of a ferromagnetic material.

7. A method of manufacturing the abrasive wire of any of the foregoing claims, comprising the steps of:
- electrodeposition on a steel wire of a coating comprising a binder and abrasive particles, said binder being made of a layer of nickel/cobalt alloy having a cobalt content in the range from 20% to 85% by mass relative to the mass of the Ni/Co alloy, by passing in an electrolyte bath (B₁) comprising at least cobalt II and nickel II ions, and abrasive particles;
- optionally, electrodeposition of an additional binder layer by passing in an electrolyte batch (B₂) comprising at least cobalt II and nickel II ions, said additional layer being made of a Ni/Co alloy having a cobalt content in the range from 20% to 85% by mass.

8. The abrasive wire manufacturing method of claim 7, ***characterized* in that** the baths (B₁) and (B₂) comprise, independently from each other, from 1 to 150 g/L of cobalt II ions and from 50 to 150 g/L of nickel II ions.

9. The abrasive wire manufacturing method of claim 7 or 8, ***characterized* in that** the bath (B₁) comprises from 1 to 100 g/L of abrasive particles.

10. A use of the abrasive wire of any of claims 1 to 6, to saw a material selected from the group comprising silicon, sapphire, and silicon carbide.
